# EUROPÄISCHE PATENTSCHRIFT

(11) **EP 2 604 867 B1**
(45) Veröffentlichungstag und Bekanntmachung des Hinweises auf die Patenterteilung: **01.07.2015**
(21) Anmeldenummer: 11193090.5
(22) Anmeldetag: 12.12.2011
(51) Int. Cl.: F16B 2/06, F16B 7/04

(54) **Klemme**
Clamp
Pince

(43) Veröffentlichungstag der Anmeldung: 19.06.2013
(73) Patentinhaber: HILTI Aktiengesellschaft, 9494 Schaan (LI)
(72) Erfinder: Merhar, Thomas, 9494 Schaan (LI); Lippuner, Ralph, 9470 Buchs (CH)
(74) Vertreter: Hilti Aktiengesellschaft Corporate Intellectual Property

(56) Entgegenhaltungen:
- EP-A2- 2 249 102
- DE-U1-202009 015 756

## Beschreibung

Die Erfindung betrifft eine Klemme zum Anbinden einer Montageschiene an einen Flansch eines Trägers, insbesondere eines T-Trägers, eines Doppel-T-Trägers oder eines Z-Trägers, die vorzugsweise auch zum Anbinden einer Gewindestange an den Träger dienen kann.

Auf dem Gebiet der Haustechnik werden Schienensysteme mit zumeist C-förmigen Schienen eingesetzt, um Rohre für Heizung, Warmwasser, Lüftung, Klima, etc. zu fixieren. In Industriegebäuden kommen T-Träger und Doppel-T-Träger als Dachkonstruktionselemente zum Einsatz. Daher werden Verbindungselemente benötigt, welche die Schienen mit den T-Trägern und Doppel-T-Trägern verbinden können.

Eine hierfür geeignete Klemme ist aus der DE 20 2009 015 756 U1 bekannt, welche die Merkmale des Oberbegriffs des Anspruchs 1 zeigt.

Weitere Montageeinheiten zur Befestigung an T-Trägern sind aus der DE 20 2010 006 322 U1 und der DE 92 04 055 U1 bekannt.

Aufgabe der Erfindung ist es, eine Klemme zum Anbinden einer Montageschiene an einen Flansch eines Trägers anzugeben, die eine besonders hohe Einsatzvielfalt gewährleistet und dabei besonders einfach und zuverlässig ist.

Die Aufgabe wird erfindungsgemäss durch eine Klemme mit den Merkmalen des Anspruchs 1 gelöst. Bevorzugte Ausführungsformen sind in den abhängigen Ansprüchen angegeben.

Die Erfindung sieht eine Klemme zum Anbinden einer Montageschiene an einen Flansch eines Trägers vor, mit einer unteren Basis, einer oberen Basis, einem Verbindungssteg, der die untere Basis und die obere Basis miteinander verbindet, einem an der unteren Basis angeordneten unteren T-förmigen Hintergreifelement zum Hintergreifen einer Schienenöffnung der Montageschiene, wobei in der oberen Basis ein zum unteren T-förmigen Hintergreifelement korrespondierendes oberes Gewindeloch für eine Klemmschraube vorgesehen ist, mit welcher der Flansch und die Montageschiene aneinandergepresst werden können, wenn das untere T-förmige Hintergreifelement eine Schienenöffnung der Montageschiene hintergreift, und einem an der oberen Basis angeordneten oberen T-förmigen Hintergreifelement zum Hintergreifen einer Schienenöffnung der Montageschiene, wobei in der unteren Basis ein zum oberen T-förmigen Hintergreifelement korrespondierendes unteres Gewindeloch für eine Klemmschraube vorgesehen ist, mit welcher der Flansch und die Montageschiene aneinandergepresst werden können, wenn das obere T-förmige Hintergreifelement eine Schienenöffnung der Montageschiene hintergreift.

Ein erster Grundgedanke der Erfindung kann darin gesehen werden, an den Klemmen T-förmige Hintergreifelemente vorzusehen, welche in Schienenöffnungen der Montageschiene eingebracht werden können, und welche diese Schienenöffnungen zum formschlüssigen Fixieren der Klemme an der Montageschiene hintergreifen können. Den T-förmigen Hintergreifelementen ist jeweils ein korrespondierendes Gewindeloch für eine Klemmschraube zugeordnet, welche derart auf den Flansch des Trägers wirken kann, dass der Flansch von der Schienenaussenseite her und das in die Schienenöffnung eingebrachte korrespondierende T-förmige Hintergreifelement von der Schieneninnenseite her an die Montageschiene angepresst wird. Auf diese Weise kann die Klemme den Flansch an der Montageschiene sichern.

Ein weiterer Grundgedanke der Erfindung liegt darin, jede Klemme mit zwei oder mehreren solcher T-förmiger Hintergreifelemente auszustatten, wobei jedem der T-förmigen Hintergreifelemente ein korrespondierendes Gewindeloch für eine korrespondierende Klemmschraube zugeordnet ist. Damit kann die erfindungsgemässe Klemme in mehreren Raumorientierungen zum Einsatz kommen, so dass ein besonders grosser Einsatzbereich gegeben ist. Vorzugsweise können die beiden T-förmigen Hintergreifelemente unterschiedliche Abmessungen, insbesondere unterschiedlich breite Köpfe aufweisen, so dass sie an unterschiedlich dimensionierten Schienenöffnungen angebunden werden können. Beispielsweise kann das obere T-förmige Hintergreifelement zum Hintergreifen von Langlöchern der Montageschiene vorgesehen sein, während das untere T-förmige Hintergreifelement zum Hintergreifen des Längsschlitzes am Schienenmund der Montageschiene dient. Damit kann ein und dieselbe Klemme zum Anbinden verschiedener Schienentypen an das Profil verwendet werden, oder die Anbindung einer Montageschiene mit verschiedenartigen Ausnehmungen in unterschiedlichen Raumorientierungen ermöglichen. Somit kann der Einsatzbereich noch weiter vergrössert werden.

Grundsätzlich kann die erfindungsgemässe Klemme in beliebiger Anordnung im Raum positioniert werden. Die Referenzfläche, auf die sich die Angaben "oben" und "unten" nach der

Erfindung beziehen, muss also nicht die Erdoberfläche sein. Insbesondere umfasst die Erfindung auch solch eine Anordnung, bei der sich das obere T-förmige Hintergreifelement näher an der Erdoberfläche befindet als das untere T-förmige Hintergreifelement, und bei der sich das obere Gewindeloch näher an der Erdoberfläche befindet als das untere Gewindeloch.

Erfindungsgemäss können die beiden T-förmigen Hintergreifelemente jeweils einen Mittelschenkel und zwei hiervon abstehende Flügel aufweisen.

Bevorzugt ist es, dass das untere T-förmige Hintergreifelement eine grössere Flügelspannweite aufweist als das obere T-förmige Hintergreifelement. Damit kann das untere T-förmige Hintergreifelement zur Anbindung an weiter dimensionierten Schienenöffnungen vorgesehen sein als das obere T-förmige Hintergreifelement. Unter der Flügelspannweite kann insbesondere der Abstand der beiden Flügelspitzen der jeweiligen T-förmigen Hintergreifelemente verstanden werden.

Insbesondere kann vorgesehen sein, dass das untere T-förmige Hintergreifelement eine Flügelspannweite aufweist, die grösser ist als eine parallel zur Flügelspannweite gemessene Weite der unteren Basis. Gemäss dieser Ausführungsform stehen die Flügel des unteren T-förmigen Hintergreifelements seitlich über die untere Basis vor. Diese Ausführungsform erlaubt die Anbindung an relativ weiten Schienenöffnungen, beispielsweise am Längsschlitz der Montageschiene, bei vergleichsweise geringem Materialaufwand.

Zusätzlich oder alternativ kann vorgesehen sein, dass das obere T-förmige Hintergreifelement eine Flügelspannweite aufweist, die kleiner oder gleich einer parallel zur Flügelspannweite gemessenen Weite der oberen Basis ist. Gemäss dieser Ausführungsform sind die Flügel des oberen T-förmigen Hintergreifelements gegenüber der oberen Basis seitlich zurückversetzt oder bündig hiermit. Diese Ausführungsform erlaubt die Anbindung an eher engen Schienenöffnungen, beispielsweise an Langlöchern der Montageschiene, bei zugleich guter Steifigkeit der Klemme.

Eine weitere bevorzugte Ausführungsform der Erfindung besteht darin, dass der Mittelschenkel des unteren T-förmigen Hintergreifelements, vorzugsweise vollständig, von der unteren Basis gebildet wird. Demgemäss sind die untere Basis und zumindest ein Teil des unteren Mittelschenkels integral ausgebildet. Diese besonders kompakte Anordnung kann insbesondere dann vorgesehen sein, wenn das untere T-förmige Hintergreifelement zur Anbindung an den Längsschlitz der Montageschiene dient.

Zusätzlich oder alternativ kann vorgesehen sein, dass der Mittelschenkel des oberen T-förmigen Hintergreifelements von der oberen Basis abgesetzt ist. Dies kann insbesondere beinhalten, dass der Mittelschenkel des oberen T-förmigen Hintergreifelements schmäler ist als die obere Basis, insbesondere in einer parallel zur Flügelspannweite verlaufenden Richtung, und/oder dass er von der oberen Basis absteht. Gemäss dieser Ausführungsform kann das obere T-förmige Hintergreifelement auch zur Anbindung an relativ engen Schienenöffnungen dienen.

Die beiden Gewindelöcher weisen vorzugsweise denselben Durchmesser und insbesondere auch dieselben Gewindeparameter auf, so dass ein und dieselbe Klemmschraube in beiden Gewindelöchern zum Einsatz kommen kann. Das untere und das obere Gewindeloch, das heisst ihre Längsachsen, verlaufen bevorzugt parallel zueinander. Das untere und das obere Gewindeloch sind erfindungsgemäss Durchgangslöcher. Das untere und das obere Gewindeloch weisen jeweils zumindest ein Innengewinde auf.

Eine vorteilhafte Weiterbildung der erfindungsgemässen Klemme besteht darin, dass sie eine U-Form mit einem innenliegenden Aufnahmeraum zur Aufnahme des Flansches enthält, welche durch die obere Basis, den Verbindungssteg und zumindest einen Teil der unteren Basis, insbesondere durch ihren weiter unten erläuterten vorderen Basisschenkel, gebildet wird. Hierdurch kann eine besonders einfache und zuverlässige Anbindung an den Flansch gewährleistet werden, insbesondere da die U-Form den Flansch auf drei Seiten umgeben kann.

Bevorzugt ist es, dass das untere T-förmige Hintergreifelement und/oder das obere T-förmige Hintergreifelement an der U-Form angeordnet sind. Hierdurch kann eine besonders kompakte und zugleich besonders steife Anordnung erhalten werden.

Grundsätzlich könnte vorgesehen sein, das untere T-förmige Hintergreifelement über die gesamte Länge der unteren Basis zu erstrecken. In diesem Fall müsste die Klemme jedoch vom Ende her in den Längsschlitz der Montageschiene eingeschoben werden. Besonders bevorzugt ist es daher, dass die Klemme in die Schienenöffnung eindrehbar ist. Insbesondere kann vorgesehen sein, dass das untere T-förmige Hintergreifelement so gegenüber dem Verbindungssteg versetzt an der unteren Basis angeordnet ist, so dass das untere T-förmige Hintergreifelement in eine Schienenöffnung, insbesondere in den Längsschlitz der Montageschiene, eindrehbar ist.

Eine vorteilhafte Ausgestaltung der Klemme besteht darin, dass die Längsachse des oberen Gewindelochs durch das untere T-förmige Hintergreifelement hindurchläuft. Da bei dieser Ausführungsform der Axialkraftvektor der Klemmkraft einer in das obere Gewindeloch eingeschraubten Klemmschraube auf das korrespondierende untere T-förmige Hintergreifelement weist, kann ein unerwünschtes Verkippen der Klemme beim Anziehen der im oberen Gewindeloch eingedrehten Klemmschraube verhindert werden. Die Längsachse des oberen Gewindelochs kann insbesondere durch den Aufnahmeraum der U-Form hindurch verlaufen.

Weiterhin ist es vorteilhaft, dass die Längsachse des unteren Gewindelochs gegenüber dem oberen T-förmigen Hintergreifelement versetzt ist. Gemäss dieser Ausführungsform verläuft die Längsachse des unteren Gewindelochs also nicht durch das obere T-förmige Hintergreifelement hindurch. Dies kann eine Anbindung der Klemme auch an kleineren Öffnungen der Montageschiene ermöglichen.

Unter der Längsachse eines Gewindelochs kann insbesondere eine fiktive, unendlich ausgedehnte Gerade verstanden werden, die mittig durch das Gewindeloch verläuft, und die vom Gewinde des Gewindelochs umlaufen wird.

Vorzugsweise kann die untere Basis einen vorderen Basisschenkel und einen hinteren Basisschenkel aufweisen, wobei der Verbindungssteg zwischen dem vorderen Basisschenkel und dem hinteren Basisschenkel von der unteren Basis absteht. Gemäss dieser Ausführungsform steht die untere Basis an zwei gegenüberliegenden Seiten über den Verbindungssteg über, wodurch bei besonders kompaktem Aufbau eine besonders hohe Einsatzvielfalt gegeben ist. Vorzugsweise ist der vordere Basisschenkel unterhalb der oberen Basis angeordnet, das heisst die genannte U-Form kann durch den vorderen Basisschenkel der unteren Basis, den Verbindungssteg und den oberen Basisschenkel gebildet sein. Insbesondere kann das untere T-förmige Hintergreifelement am vorderen Basisschenkel angeordnet sein und/oder das untere Gewindeloch am hinteren Basisschenkel. Der vordere Basisschenkel kann auch zusätzliche Anbindungsöffnungen aufweisen, die auch ein Gewinde aufweisen können. Die obere Basis und/oder die untere Basis, insbesondere ihre Basisschenkel, sind geeigneterweise rechtwinklig zum Verbindungssteg angeordnet.

Eine besonders kompakte Bauform kann in vorteilhafter Weise dadurch gegeben sein, dass die obere Basis, der Verbindungssteg und die untere Basis eine µ-Form bilden. Beispielsweise kann hierzu die untere Basis, insbesondere mit jeweils einem der beiden Basisschenkel, an zwei gegenüberliegenden Seiten des Verbindungsstegs vom Verbindungssteg vorstehen, wohingegen die obere Basis nur an einer Seite des Verbindungsstegs vom Verbindungssteg vorsteht. Insbesondere kann vorgesehen sein, dass die Längsachse des unteren Gewindelochs die Klemme lediglich in der unteren Basis durchdringt. Die zuvor genannte U-Form kann einen Teil der µ-Form bilden.

Besonders bevorzugt ist es, dass die obere Basis, die untere Basis und vorteilhafterweise auch der Verbindungssteg dieselbe Weite aufweisen. Dies kann im Hinblick auf die Fertigung und die Steifigkeit der Klemme vorteilhaft sein.

Weiterhin ist es vorteilhaft, dass der Verbindungssteg zwischen der Längsachse des oberen Gewindelochs und der Längsachse des unteren Gewindelochs verläuft. Gemäss dieser Ausführungsvariante befinden sich die beiden Längsachsen und somit die beiden Gewindelöcher auf gegenüberliegenden Seiten des Verbindungsstegs. Insbesondere kann die Klemme eine Z-Form enthalten, bestehend aus der oberen Basis mit dem oberen Gewindeloch, dem Verbindungssteg und demjenigen Teil der unteren Basis, der das untere Gewindeloch enthält, also vorzugsweise dem hinteren Basisschenkel.

Am Verbindungssteg, insbesondere auf gegenüberliegenden Seiten des Verbindungsstegs, können zumindest zwei Sicherungszapfen angeordnet sein. Diese Sicherungszapfen können verhindern, dass die Klemme durch den Längsschlitz der Montageschiene in die Montageschiene fällt, bevor sie mit der Klemmschraube am Flansch festgelegt ist. Demgemäss sind die Sicherungszapfen zweckmässigerweise breiter als der Mittelschenkel des unteren T-förmigen Hintergreifelements, insbesondere gemessen parallel zur Flügelspannweite des unteren Hintergreifelements.

Das untere T-förmige Hintergreifelement und/oder das obere T-förmige Hintergreifelement weist eine vorzugsweise eine Verzahnung zur Reibungserhöhung an der Montageschiene auf. Diese Verzahnung ist vorzugsweise zumindest an den jeweiligen Flügeln angeordnet.

Die Erfindung umfasst auch eine Anordnung bestehend aus einer erfindungsgemässen Klemme, aus einem Träger mit einem Flansch, und vorzugsweise aus einer Montageschiene, wobei in einem der beiden Gewindelöcher der Klemme eine Klemmschraube angeordnet ist, welche die Klemme und gegebenenfalls die Montageschiene mit dem Flansch verklemmt. Sofern eine Montageschiene vorhanden ist, kann die Klemme wie beschrieben mit ihrem oberen T-förmigen Hintergreifelement ein Langloch der Montageschiene oder mit ihrem unteren T-förmigen Hintergreifelement einen längs der gesamten Montageschiene verlaufenden Längsschlitz hintergreifen.

Ausser zur Anbindung einer Montageschiene kann die erfindungsgemässe Klemme auch zur Anbindung einer Gewindestange an den Flansch dienen. Die Gewindestange kann insbesondere in das untere Gewindeloch eingeschraubt werden, wobei die Klemme mit einer im oberen Gewindeloch angeordneten Klemmschraube mit dem Flansch verklemmt wird. Somit ist der Einsatzbereich noch weiter vergrössert.

Die Erfindung wird nachfolgend anhand bevorzugter Ausführungsbeispiele näher erläutert, die schematisch in den beiliegenden Figuren dargestellt sind. In den Figuren zeigen schematisch:
- Figur 1:: eine Seitenansicht;
- Figur 2:: eine Frontansicht;
- Figur 3:: eine Ansicht von oben; und
- Figur 4:: eine perspektivische Ansicht einer Ausführungsform einer erfindungsgemässen Klemme;
- Figur 5:: die Verwendung einer Klemme entsprechend Figuren 1 bis 4 zum Anbinden einer Gewindestange an den Flansch eines Trägers;
- Figur 6:: die Verwendung einer Klemme entsprechend Figuren 1 bis 4 am Längsschlitz einer Montageschiene zum Anbinden der Montageschiene an den Flansch eines Trägers; und
- Figur 7:: die Verwendung einer Klemme entsprechend Figuren 1 bis 4 an einem Langloch einer Montageschiene zum Anbinden der Montageschiene an den Flansch eines Trägers.

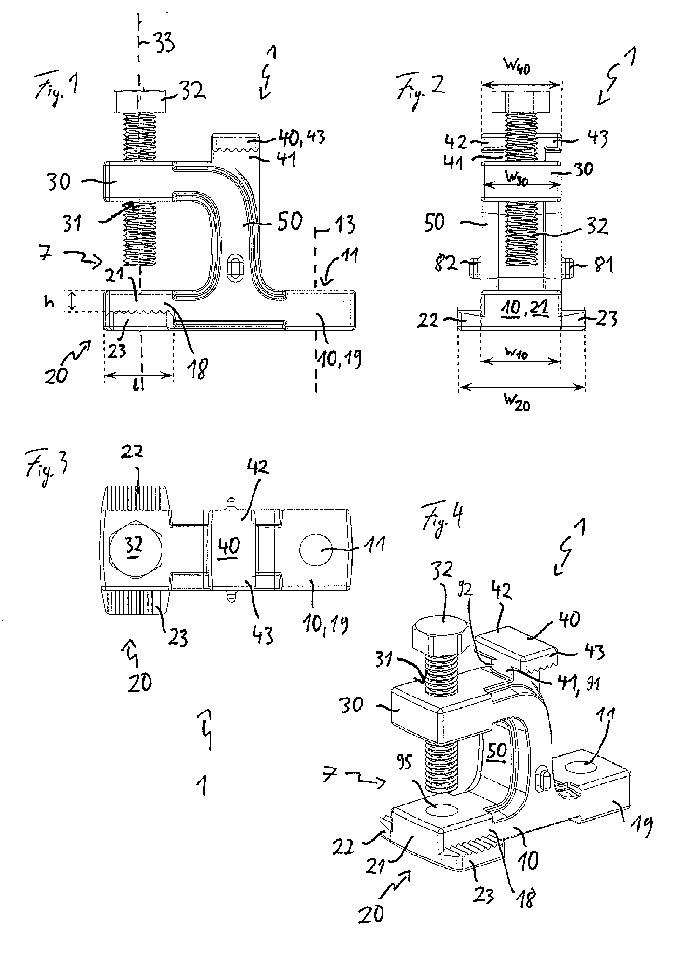

Die Figuren, insbesondere die Figuren 1 bis 4, zeigen ein Ausführungsbeispiel einer erfindungsgemässen Klemme 1.

Die Klemme 1 weist eine stangenförmige untere Basis 10 mit einem vorderen Basisschenkel 18 und einem mit dem vorderen Basisschenkel 18 fluchtenden hinteren Basisschenkel 19 auf. Ferner weist die Klemme eine obere stangenförmige Basis 30 auf. Die untere Basis 10 ist mit der oberen Basis 30 über einen Verbindungssteg 50 verbunden, welcher endseitig von der oberen Basis 30 und mittig von der unteren Basis 10 vorsteht. Dabei befindet sich der Verbindungssteg 50 zwischen dem vorderen Basisschenkel 18 und dem hinteren Basisschenkel 19 der unteren Basis 10. Der Verbindungssteg 50 verläuft rechtwinklig zur unteren Basis 10 sowie zu oberen Basis 30.

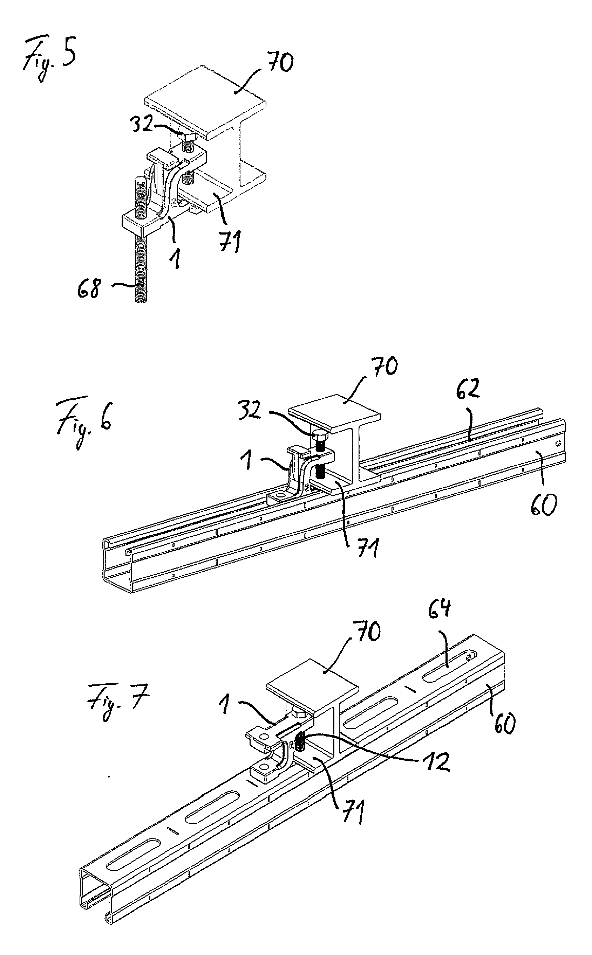

Wie insbesondere in der Seitenansicht der Figur 1 erkennbar ist, bilden die obere Basis 30, der Verbindungssteg 50 und der vordere Basisschenkel 18 der unteren Basis 10 einen Aufnahmeraum 7, der wie in den Figuren 5 und 6 gezeigt zur Aufnahme und Fixierung eines Flansches 71 eines Trägers 70 dienen kann. Wie in der Seitenansicht der Figur 1 weiter erkennbar ist, bilden die obere Basis 30, der Verbindungssteg 50 und die untere Basis 10 in ihrer Gesamtheit, also umfassend sowohl den vorderen Basisschenkel 18 als auch den hinteren Basisschenkel 19, eine liegende µ-Form.

Der Verbindungssteg 50 verbindet die untere Basis 10 und die obere Basis 30 in stoffschlüssiger Art und Weise. Der Verbindungssteg 50 stellt dabei die einzige Verbindung der beiden Basen 10 und 30 dar. Die untere Basis 10, die obere Basis 30 und der Verbindungssteg 50 sind vorzugsweise einstückig ausgebildet.

Am vorderen Ende der unteren Basis 10, nämlich am vorderen Ende des vorderen Basisschenkels 18, ist ein T-förmiges Hintergreifelement 20 vorgesehen. Dieses untere T-förmige Hintergreifelement 20 besteht aus einem Mittelschenkel 21, der im dargestellten Ausführungsbeispiel vollständig durch den Kopf des vorderen Basisschenkels 18 gebildet wird, sowie aus zwei Flügeln 22 und 23, die auf gegenüberliegenden Seiten vom Mittelschenkel 21, das heisst vom vorderen Basisschenkel 18 abstehen. In der oberen Basis 30 ist ein zum unteren T-förmigen Hintergreifelement 20 korrespondierendes oberes Gewindeloch 31 für eine Klemmschraube 32 vorgesehen, wobei die Längsachse 33 des oberen Gewindelochs 31 durch das untere T-förmige Hintergreifelement 20 hindurch verläuft.

An der oberen Basis 30 befindet sich in der Verlängerung des Verbindungsstegs 50 ein weiteres T-förmiges Hintergreifelement 40. Dieses obere T-förmige Hintergreifelement 40 weist ebenfalls einen Mittelschenkel 41 sowie zwei Flügel 42 und 43 auf, die an gegenüberliegenden Seiten des Mittelschenkels 41 vom Mittelschenkel 41 abstehen. Im Gegensatz zum unteren T-förmigen Hintergreifelement 20, dessen Mittelschenkel 21 durch die untere Basis 10 selbst gebildet wird, ist der Mittelschenkel 41 des oberen T-förmigen Hintergreifelements 40 von der oberen Basis 30 abgesetzt.

Auch dem oberen T-förmigen Hintergreifelement 40 ist ein korrespondierendes Gewindeloch 11 für eine Klemmschraube 12 zugeordnet. Dieses korrespondierende Gewindeloch 11 befindet sich in der unteren Basis 10, nämlich im hinteren Basisschenkel 19 der unteren Basis 10, und kann somit also unteres Gewindeloch 11 bezeichnet werden. Die Längsachse 13 des unteren Gewindelochs 11 verläuft parallel und versetzt zur Längsachse 33 des oberen Gewindelochs 31. Während die Längsachse 33 des oberen Gewindelochs 31 die Klemme 1 zweifach schneidet, nämlich in der oberen Basis 30 und in der unteren Basis 10, dort im vorderen Basisschenkel 18 und im unteren T-förmigen Hintergreifelement 20, schneidet die Längsachse 13 des unteren Gewindelochs 11 die Klemme 1 nur einfach, nämlich in der unteren Basis 10 im hinteren Basisschenkel 19. Die Längsachse 13 des unteren Gewindelochs 11 ist somit zum oberen T-förmigen Hintergreifelement 40 versetzt.

Die Flügel 42 und 43 des oberen T-förmigen Hintergreifelements 40 verlaufen parallel zu den Flügeln 22 und 23 des unteren T-förmigen Hintergreifelements 20. Die Flügel 42 und 43 des oberen T-förmigen Hintergreifelements 40 sind einstückig mit der oberen Basis 30 ausgebildet und/oder die Flügel 22 und 23 des unteren T-förmigen Hintergreifelements 20 sind einstückig mit der unteren Basis 10 ausgebildet.

Wie insbesondere in Figur 2 zu erkennen ist, ist die Flügelspannweite w₂₀ des unteren T-förmigen Hintergreifelements 20 grösser als die Flügelspannweite w₄₀ des oberen T-förmigen Hintergreifelements 40. Die Flügel 22 und 23 des unteren T-förmigen Hintergreifelements 20 stehen dabei seitlich über die untere Basis 10 vor, so dass die Flügelspannweite w₂₀ des unteren T-förmigen Hintergreifelements 20 grösser ist als die parallel hierzu gemessene Weite w₁₀ der unteren Basis 10. Die Flügelspannweite w₄₀ des oberen T-förmigen Hintergreifelements 40 entspricht hingegen etwa der parallel hierzu gemessenen Weite w₃₀ der oberen Basis 30. Überdies ist w₁₀ zumindest annähernd so gross wie w₃₀.

Die unterschiedlichen Verwendungsmöglichkeiten der Klemme 1 sind in den Figuren 5 bis 7 dargestellt.

Wie Figur 5 zeigt, kann die Klemme 1 zum Anbinden einer Gewindestange 68 an einen Flansch 71 eines Trägers 70 dienen, welcher insbesondere als T-Träger oder Doppel-T-Träger ausgebildet sein kann. In diesem Fall wird der Flansch 71 in den Aufnahmeraum 7 eingeführt und mit einer Klemmschraube 32 im oberen Gewindeloch 31 an die untere Basis 10, nämlich an ihren vorderen Basisschenkel 18 angepresst. Hierdurch wird die Klemme 1 am Flansch 71 festgelegt. Die Gewindestange 68 wird in das untere Gewindeloch 11 eingedreht.

Daneben kann die Klemme 1 wie in den Figuren 6 und 7 gezeigt zum Anbinden einer Montageschiene 60 an den Flansch 71 des Trägers 70 dienen. Wie insbesondere in Figur 6 erkennbar ist, weist eine solche Montageschiene 60 üblicherweise eine als Schlitz ausgebildete Schienenöffnung 62 auf, die sich über die Länge der gesamten Montageschiene 60 erstreckt. Zusätzlich oder alternativ kann die Montageschiene wie in Figur 7 gezeigt auch als Langlöcher ausgebildete Schienenöffnungen 64 aufweisen.

Wie in Figur 7 dargestellt ist, kann die Montageschiene 60 mittels der erfindungsgemässen Klemme 1 über den Schlitz 62 der Montageschiene 60 am Flansch 71 des Trägers 70 festgelegt werden. Hierzu wird das untere T-förmige Hintergreifelement 20 in den Innenraum der Montageschiene 60 eingebracht, so dass das untere T-förmige Hintergreifelement 20 mit seinen Flügel 22 und 23 den Schlitz 62 hintergreift. Hierdurch wird das untere T-förmige Hintergreifelement 20 formschlüssig an der Montageschiene 60 festgelegt. Der Flansch 71 wird in den Aufnahmeraum 7 eingeschoben und mittels einer Klemmschraube 32 im oberen Gewindeloch 31 an die Montageschiene 60 angepresst und damit an der Montageschiene 60 gesichert. Dabei zieht die Klemmschraube 32 das untere T-förmige Hintergreifelement 20 nach oben an die Montageschiene 60 und sichert dieses ebenfalls an der Montageschiene 60.

Damit das untere T-förmige Hintergreifelement 20 mit seinen Flügeln 22 und 23 den Schlitz 62 hintergreifen kann, muss die Weite w₁₀ der unteren Basis 10 kleiner, die Spannweite w₂₀ des unteren T-förmigen Hintergreifelements 20 hingegen grösser sein als die Weite des Schlitzes 62. Wie Figur 1 zeigt, ist die Länge I des unteren T-förmigen Hintergreifelements 20 längs der unteren Basis 10 so gewählt, dass die Klemme 1 in den Schlitz 62 eingedreht werden kann, und nicht vom Ende der Montageschiene 60 eingeschoben werden muss. Dies bietet die Möglichkeit, die Klemme 1 an jedem beliebigen Ort der Montageschiene 60 einsetzen zu können. Die freie Höhe h muss kleiner sein als die Schienenschulterhöhe der Montageschiene 60.

Wie in Figur 7 dargestellt ist, kann die Montageschiene 60 auch über eines ihrer Langlöcher 64 am Flansch 71 des Trägers 70 festgelegt werden. Hierzu wird die Klammer 1 gegenüber Figur 6 umgedreht und das obere T-förmige Hintergreifelement 40 in den Innenraum der Montageschiene 60 eingebracht, so dass das obere T-förmige Hintergreifelement 40 mit seinen Flügel 42 und 43 das Langloch 64 hintergreift. Hierdurch wird das obere T-förmige Hintergreifelement 40 formschlüssig an der Montageschiene 60 festgelegt. Der Flansch 71 wird am hinteren Basisschenkel 19 der unteren Basis 10 positioniert und mittels einer Klemmschraube 12 im unteren Gewindeloch 11 an die Montageschiene 60 angepresst und damit an der Montageschiene 60 gesichert. Dabei zieht die Klemmschraube 12 das obere T-förmige Hintergreifelement 40 an die Montageschiene 60 und sichert dieses ebenfalls an der Montageschiene 60.

Damit das obere T-förmige Hintergreifelement 40 mit seinen Flügeln 42 und 43 das Langloch 64 hintergreifen kann, muss die Weite w₄₀ des oberen T-förmigen Hintergreifelements 40 grösser sein als die Weite des Langlochs 64.

Der Mittelschenkel 41 des oberen T-förmigen Hintergreifelements 40 ist vorzugsweise so dimensioniert, dass sich die Klemme 1 um einen Winkel von maximal 90° in das Langloch 64 eindrehen lässt. Dies gewährleistet eine besonders zuverlässige Anbindung. Insbesondere kann der Mittelschenkel 41 zur Drehwinkelbegrenzung eine ebene Anschlagfläche 91 aufweisen. An diese Anschlagfläche 91, welche dem oberen Gewindeloch 31 zugewandt ist, schliesst sich an lediglich einer Seite eine gekrümmte Einlauffläche 92 stetig an, wohingegen die ebene Anschlagfläche 91 an der der gekrümmten Einlauffläche 92 gegenüberliegenden Seite stufenförmig abgeschlossen ist (vgl. Figur 4).

Wie insbesondere die Figuren 1 bis 4 zeigen, weisen die Flügel 22, 23, 42, 43 der beiden Hintergreifelemente 20 und 40 eine Verzahnung zur Reibkrafterhöhung an der Montageschiene 60 auf.

Auf gegenüberliegenden Seiten des Verbindungssteges 50 stehen Sicherungszapfen 81 und 82 hervor, die ein Hereinfallen der Klemme 1 in den Schlitz 62 der Montageschiene 60 während des Herstellens der Verbindung gemäss Figur 7 verhindern können.

Wie Insbesondere Figur 4 zeigt, kann im vorderen Basisschenkel 18 der unteren Basis 10 eine weitere Bohrung, insbesondere ein weiteres Gewindeloch 95, vorhanden sein. Diese weitere Bohrung kann die Einsatzvielfalt noch weiter vergrössern. Die weitere Bohrung kann, muss aber nicht, mit dem oberen Gewindeloch 31 fluchten.

## Patentansprüche

1. Klemme (1) zum Anbinden einer Montageschiene (60) an einen Flansch (71) eines Trägers (70), mit
- einer unteren Basis (10),
- einer oberen Basis (30),
- einem Verbindungssteg (50), der die untere Basis (10) und die obere Basis (30) miteinander verbindet,
- einem an der unteren Basis (10) angeordneten unteren T-förmigen Hintergreifelement (20) zum Hintergreifen einer Schienenöffnung (62) der Montageschiene (60),
wobei in der oberen Basis (30) ein zum unteren T-förmigen Hintergreifelement (20) korrespondierendes oberes Gewindeloch (31) für eine Klemmschraube (32) vorgesehen ist, mit welcher der Flansch (71) und die Montageschiene (60) aneinandergepresst werden können, wenn das untere T-förmige Hintergreifelement (20) eine Schienenöffnung (62) der Montageschiene (60) hintergreift, **gekennzeichnet durch**
- ein an der oberen Basis (30) angeordnetes oberes T- förmiges Hintergreifelement (40) zum Hintergreifen einer Schienenöffnung (64) der Montageschiene (60),
wobei in der unteren Basis (10) ein zum oberen T-förmigen Hintergreifelement (40) korrespondierendes unteres Gewindeloch (11) für eine Klemmschraube (12) vorgesehen ist, mit welcher der Flansch (71) und die Montageschiene (60) aneinandergepresst werden können, wenn das obere T-förmige Hintergreifelement (40) eine Schienenöffnung (64) der Montageschiene (60) hintergreift.

2. Klemme (1) nach Anspruch 1,
**dadurch gekennzeichnet,**
**dass** die beiden T-förmigen Hintergreifelemente (20, 40) jeweils einen Mittelschenkel (21, 42) und zwei hiervon abstehende Flügel (22, 23, 42, 43) aufweisen.

3. Klemme (1) nach Anspruch 2, **dadurch gekennzeichnet,**
**dass** das untere T-förmige Hintergreifelement (20) eine grössere Flügelspannweite (w) aufweist als das obere T-förmige Hintergreifelement (40 ),
wobei das untere T-förmige Hintergreifelement (20) eine Flügelspannweite (W ₂₀) aufweist, die grösser ist als eine parallel zur Flügelspannweite (W ₂₀) gemessene Weite (W₁₀) der unteren Basis (10), und wobei das obere T-förmige Hintergreifelement (40) eine Flügelspannweite (w₄₀) aufweist, die kleiner oder gleich einer parallel zur Flügelspannweite (w₄₀) gemessenen Weite (w₃₀) der oberen Basis (30) ist.

4. Klemme (1) nach einem der Ansprüche 2 oder 3,
**dadurch gekennzeichnet,**
**dass** der Mittelschenkel (21) des unteren T-förmigen Hintergreifelements (20) von der unteren Basis (10) gebildet wird, und
**dass** der Mittelschenkel (41) des oberen T-förmigen Hintergreifelements (40) von der oberen Basis (30) abgesetzt ist.

5. Klemme (1) nach einem der vorstehenden Ansprüche,
**dadurch gekennzeichnet,**
**dass** die beiden Gewindelöcher (11 und 31) denselben Durchmesser aufweisen.

6. Klemme (1) nach einem der vorstehenden Ansprüche,
**dadurch gekennzeichnet,**
**dass** sie eine U-Form mit einem innenliegenden Aufnahmeraum (7) zur Aufnahme des Flansches (71) enthält, welche durch die obere Basis (30), den Verbindungssteg (50) und einen Teil der unteren Basis (10) gebildet wird.

7. Klemme (1) nach Anspruch 6,
**dadurch gekennzeichnet,**
**dass** das untere T-förmige Hintergreifelement (20) und das obere T-förmige Hintergreifelement (40) an der U-Form angeordnet sind.

8. Klemme (1) nach Anspruch 7,
**dadurch gekennzeichnet,**
**dass** das untere T-förmige Hintergreifelement (20) so gegenüber dem Verbindungssteg (50) versetzt an der unteren Basis (10) angeordnet ist, so dass das untere T-förmige Hintergreifelement (20) in eine Schienenöffnung (62) eindrehbar ist.

9. Klemme (1) nach einem der vorstehenden Ansprüche,
**dadurch gekennzeichnet,**
**dass** die Längsachse (33) des oberen Gewindelochs (31) durch das untere T-förmige Hintergreifelement (20) hindurchläuft, und
**dass** die Längsachse (13) des unteren Gewindelochs (11) gegenüber dem oberen T-förmigen Hintergreifelement (40) versetzt ist.

10. Klemme (1) nach einem der vorstehenden Ansprüche,
**dadurch gekennzeichnet,**
**dass** die untere Basis (10) einen vorderen Basisschenkel (18) und einen hinteren Basisschenkel (19) aufweist, wobei der Verbindungssteg (50) zwischen dem vorderen Basisschenkel (18) und dem hinteren Basisschenkel (19) von der unteren Basis (10) absteht,
**dass** das untere T-förmige Hintergreifelement (20) am vorderen Basisschenkel (18) angeordnet ist, und
**dass** das untere Gewindeloch (11) am hinteren Basisschenkel (19) angeordnet ist.

11. Klemme (1) nach einem der vorstehenden Ansprüche,
**dadurch gekennzeichnet,**
**dass** die obere Basis (30), der Verbindungssteg (50) und die untere Basis (10) eine µ-Form bilden, und
**dass** die obere Basis (30), die untere Basis (10) und der Verbindungssteg (50) dieselbe Weite (w) aufweisen.

12. Klemme (1) nach einem der vorstehenden Ansprüche,
**dadurch gekennzeichnet,**
**dass** der Verbindungssteg (50) zwischen der Längsachse des oberen Gewindelochs (31) und der Längsachse des unteren Gewindelochs (11) verläuft.

13. Klemme (1) nach einem der vorstehenden Ansprüche,
**dadurch gekennzeichnet,**
**dass** am Verbindungssteg (50) zwei Sicherungszapfen (81, 82) angeordnet sind.

14. Klemme (1) nach einem der vorstehenden Ansprüche,
**dadurch gekennzeichnet,**
**dass** das untere T-förmige Hintergreifelement (20) und das obere T-förmige Hintergreifelement (40) eine Verzahnung zur Reibungserhöhung an der Montageschiene (60) aufweisen.

15. Anordnung bestehend aus einer Klemme (1) nach einem der vorstehenden Ansprüche, aus einem Träger (70) mit einem Flansch (71) und vorzugsweise aus einer Montageschiene (60), wobei in einem der beiden Gewindelöcher (11, 31) der Klemme (1) eine Klemmschraube (32, 12) angeordnet ist, welche die Klemme (1) und gegebenenfalls die Montageschiene (60) mit dem Flansch (71) verklemmt.

## Claims

1. A clamp (1) for securing a mounting rail (60) to a flange (71) of a beam (70), said clamp (1) comprising:
- a lower base (10),
- an upper base (30),
- a connecting web (50) linking the lower base (10) and upper base (30),
- a lower T-shaped rear engagement element (20) provided on the lower base (10) for engaging behind a rail opening (62) in the mounting rail (60),
in which case, provided in the upper base (30), there is an upper threaded hole (31), corresponding to the lower T-shaped rear engagement element (20), for receiving a clamping screw (32), by means of which the flange (71) and the mounting rail (60) can be pressed together when the lower T-shaped rear engagement element (20) engages behind a rail opening (62) in the mounting rail (60),
**characterized by**
an upper T-shaped rear engagement element (40) provided on the upper base (30) for engaging behind a rail opening (64) in the mounting rail (60), and a lower threaded hole (11), corresponding to the upper T-shaped rear engagement element (40), being provided in the lower base (10) for receiving a clamping screw (12), by means of which the flange (71) and the mounting rail (60) can be pressed together when the upper T-shaped rear engagement element (40) engages behind a rail opening (64) in the mounting rail (60).

2. A clamp (1) according to Claim 1,
**characterized in that**
the two T-shaped rear engagement elements (20, 40) each comprise a middle leg (21, 42) and two wings (22, 23, 42, 43) projecting from said middle leg (21, 42).

3. A clamp (1) according to Claim 2,
**characterized in that**
the lower T-shaped rear engagement element (20) has a larger wingspan (w) than the upper T-shaped rear engagement element (40),
the lower T-shaped rear engagement element (20) having a wingspan (w₂₀) which is larger than a width (w₁₀) of the lower base (10) measured parallel to the wingspan (w₂₀), and the upper T-shaped rear engagement element (40) having a wingspan (w₄₀) which is smaller than or equal to a width (w₃₀) of the upper base (30) measured parallel to the wingspan (w₄₀).

4. A clamp (1) according to one of Claims 2 or 3,
**characterized in that**
the middle leg (21) of the lower T-shaped rear engagement element (20) is formed by the lower base (10),
and **in that** the middle leg (41) of the upper T-shaped rear engagement element (40) is offset from the upper base (30).

5. A clamp (1) according to one of the preceding claims,
**characterized in that**
the two threaded holes (11 and 31) have the same diameter.

6. A clamp (1) according to one of the preceding claims,
**characterized in that**
it involves a U-shape with an interior space (7) for receiving the flange (71), said U-shape being formed by the upper base (30), the connecting web (50) and a portion of the lower base (10).

7. A clamp (1) according to Claim 6,
**characterized in that**
the lower T-shaped rear engagement element (20) and the upper T-shaped rear engagement element (40) are provided on the U-shape.

8. A clamp (1) according to Claim 7,
**characterized in that**
the lower T-shaped rear engagement element (20) is disposed on the lower base (10) so as to be offset relative to the connecting web (50) in such a way that the lower T-shaped rear engagement element (20) can be inserted into a rail opening (62).

9. A clamp (1) according to one of the preceding claims,
**characterized in that**
the longitudinal axis (33) of the upper threaded hole (31) passes through the lower T-shaped rear engagement element (20), and
and **in that** the longitudinal axis (13) of the lower threaded hole (11) is offset relative to the upper T-shaped rear engagement element (40).

10. A clamp (1) according to one of the preceding claims,
**characterized in that**
the lower base (10) has a front base leg (18) and a rear base leg (19), the connecting web (50) projecting from the lower base (10) between the front base leg (18) and rear base leg (19),
**in that** the lower T-shaped rear engagement element (20) is disposed on the front base leg (18),
and **in that** the lower threaded hole (11) is provided in the rear base leg (19).

11. A clamp (1) according to one of the preceding claims,
**characterized in that**
the upper base (30), the connecting web (50) and the lower base (10) form a µ-shape,
and **in that** the upper base (30), the lower base (10) and the connecting web (50) have the same width (w).

12. A clamp (1) according to one of the preceding claims,
**characterized in that**
the connecting web (50) extends between the longitudinal axis of the upper threaded hole (31) and the longitudinal axis of the lower threaded hole (11).

13. A clamp (1) according to one of the preceding claims,
**characterized in that**
two safety pegs (81, 82) are provided on the connecting web (50).

14. A clamp (1) according to one of the preceding claims,
**characterized in that**
the lower T-shaped rear engagement element (20) and the upper T-shaped rear engagement element (40) are denticulated for the purpose of increasing friction against the mounting rail (60).

15. An arrangement consisting of a clamp (1) according to one of the preceding claims, of a beam (70) having a flange (71), and preferably of a mounting rail (60), in which case a clamping screw (32, 12) is provided in one of the two threaded holes (11, 31) of the clamp (1) for securing the clamp (1) and, where applicable, the mounting rail (60) to the flange (71).

## Revendications

1. Pince (1) destinée à relier un rail de montage (60) à une semelle (71) d'une poutre (70), comportant :
- une base inférieure (10),
- une base supérieure (30),
- une âme de liaison (50) qui relie la base inférieure (10) et la base supérieure (30) l'une à l'autre,
- un élément de prise arrière inférieur en forme de T (20), agencé sur la base inférieure (10) pour venir en prise par l'arrière avec une ouverture de rail (62) du rail de montage (60),
dans laquelle dans la base supérieure (30) est prévu un trou fileté supérieur (31) pour une vis de serrage (32), correspondant à l'élément de prise arrière inférieur en forme de T (20), trou fileté au moyen duquel la semelle (71) et le rail de montage (60) peuvent être pressés l'un contre l'autre lorsque l'élément de prise arrière inférieur en forme de T (20) vient en prise par l'arrière avec une ouverture de rail (62) du rail de montage (60),
**caractérisée par** un élément de prise arrière supérieur en forme de T (40), agencé sur la base supérieure (30) pour venir en prise par l'arrière avec une ouverture de rail (64) du rail de montage (60),
dans laquelle dans la base inférieure (10) est prévu un trou fileté inférieur (11) pour une vis de serrage (12), correspondant à l'élément de prise arrière supérieur en forme de T (40), trou fileté au moyen duquel la semelle (71) et le rail de montage (60) peuvent être pressés l'un contre l'autre lorsque l'élément de prise arrière supérieur en forme de T (40) vient en prise par l'arrière avec une ouverture de rail (64) du rail de montage (60).

2. Pince (1) selon la revendication 1, **caractérisée en ce que** les deux éléments de prise arrière en forme de T (20, 40) comportent respectivement une patte centrale (21, 42) et deux ailes (22, 23, 42, 43) faisant saillie à partir de celle-ci.

3. Pince (1) selon la revendication 2, **caractérisée en ce que** l'élément de prise arrière supérieur en forme de T (40) présente une largeur d'étendue d'aile (w₄₀) qui est inférieure ou égale à une largeur (w₃₀) de la base supérieure (30) mesurée parallèlement à la largeur d'étendue d'aile (w₄₀).

4. Pince (1) selon l'une des revendications 2 ou 3, **caractérisée en ce que** la patte centrale (21) de l'élément de prise arrière inférieur en forme de T (20) est formée par la base inférieure (10), et **en ce que** la patte centrale (41) de l'élément de prise arrière supérieur en forme de T (40) est décalée par rapport à la base supérieure (30).

5. Pince (1) selon l'une des revendications précédentes, **caractérisée en ce que** les deux trous filetés (11 et 31) ont le même diamètre.

6. Pince (1) selon l'une des revendications précédentes, **caractérisée en ce qu'**elle a une forme en U avec un espace de réception intérieur (7) pour recevoir la semelle (71), laquelle forme en U est formée par la base supérieure (30), l'âme de liaison (50) et une partie de la base inférieure (10).

7. Pince (1) selon la revendication 6, **caractérisée en ce que** l'élément de prise arrière inférieur en forme de T (20) et l'élément de prise arrière supérieur en forme de T (40) sont agencés sur la forme en U.

8. Pince (1) selon la revendication 7, **caractérisée en ce que** l'élément de prise arrière inférieur en forme de T (20) est agencé sur la base inférieure (10) de manière décalée par rapport à l'âme de liaison (50), de telle sorte que l'élément de prise arrière inférieur en forme de T (20) peut être introduit par rotation dans une ouverture de rail (62).

9. Pince (1) selon l'une des revendications précédentes, **caractérisée en ce que** l'axe longitudinal (33) du trou fileté supérieur (31) s'étend à travers l'élément de prise arrière inférieur en forme de T (20), et **en ce que** l'élément de prise arrière inférieur en forme de T (20) présente une plus grande largeur d'étendue d'aile (w) que l'élément de prise arrière supérieur en forme de T (40),
dans laquelle l'élément de prise arrière inférieur en forme de T (20) présente une largeur d'étendue d'aile (w₂₀) qui est plus grande qu'une largeur (w₁₀) de la base inférieure (10) mesurée parallèlement à la largeur d'étendue d'aile (W₂₀),
et **en ce que** l'axe longitudinal (13) du trou fileté inférieur (11) est décalé par rapport à l'élément de prise arrière supérieur en forme de T (40).

10. Pince (1) selon l'une des revendications précédentes, **caractérisée en ce que** la base inférieure (10) comporte une patte de base avant (18) et une patte de base arrière (19), dans laquelle l'âme de liaison (50) entre la patte de base avant (18) et la patte de base arrière (19) fait saillie à partir de la base inférieure (10),
**en ce que** l'élément de prise arrière inférieur en forme de T (20) est agencé sur la patte de base avant (18), et
**en ce que** le trou fileté (11) est agencé sur la patte de base arrière (19).

11. Pince (1) selon l'une des revendications précédentes, **caractérisée en ce que** la base supérieure (30), l'âme de liaison (50) et la base inférieure (10) forment une forme de µ,
et **en ce que** la base supérieure (30), la base inférieure (10) et l'âme de liaison (50) présentent la même largeur (w).

12. Pince (1) selon l'une des revendications précédentes, **caractérisée en ce que** l'âme de liaison (50) s'étend entre l'axe longitudinal du trou fileté supérieur (31) et l'axe longitudinal du trou inférieur (11).

13. Pince (1) selon l'une des revendications précédentes, **caractérisée en ce que** deux goupilles de blocage (81, 82) sont agencées sur l'âme de liaison (50).

14. Pince (1) selon l'une des revendications précédentes, **caractérisée en ce que** l'élément de prise arrière inférieur en forme de T (20) et l'élément de prise arrière supérieur en forme de T (40) comportent une denture pour augmenter le frottement sur le rail de montage (60).

15. Agencement constitué d'une pince (1) selon l'une des revendications précédentes, d'une poutre (70) ayant une semelle (71) et de préférence d'un rail de montage (60), dans lequel une vis de serrage (32, 12) est agencée dans l'un des deux trous filetés (11, 31) de la pince (1), laquelle vis de serrage bloque la pince (1) et éventuellement le rail de montage (60) avec la semelle (71).
